# EUROPÄISCHE PATENTSCHRIFT

(11) **EP 3 564 066 B1**
(45) Veröffentlichungstag und Bekanntmachung des Hinweises auf die Patenterteilung: **10.03.2021**
(21) Anmeldenummer: 19000155.2
(22) Anmeldetag: 28.03.2019
(51) Int. Cl.: B60N 2/00, B60N 2/56, B60N 2/70, B60R 21/015, G01L 1/22

(54) **SITZBELEGUNGSERFASSUNGSELEMENT**
SEAT OCCUPANCY MONITORING ELEMENT
ÉLÉMENT DE DÉTECTION DE L'OCCUPATION D'UN SIÈGE

(30) Priorität: 30.04.2018 DE 202018002148 U; 04.06.2018 DE 202018002642 U
(43) Veröffentlichungstag der Anmeldung: 06.11.2019
(73) Patentinhaber: I.G. Bauerhin GmbH, 63584 Gründau (DE)
(72) Erfinder: Schlosser, Michael, 63450 Hanau (DE); Bauer, Stefan, 63755 Michelbach (DE)
(74) Vertreter: Grimm, Ekkehard

(56) Entgegenhaltungen:
- EP-A1- 2 062 771
- EP-A1- 2 700 927
- EP-A2- 0 890 430
- CN-U- 203 005 161

## Beschreibung

Die vorliegende Erfindung betrifft ein Sitzbelegungserfassungselement für einen Fahrzeugsitz mit einem Foliendrucksensor, der mindestens ein Sensorelement, angeordnet auf einer Trägerfolie, aufweist, wobei der Foliendrucksensor auf einer Unterlageschicht flächig aufliegt und daran fixiert ist, gemäß dem Oberbegriff des Anspruchs 1. Ein solches Sitzbelegungserfassungselement ist aus der EP 2 700 927 A1 bekannt.

Die Sitzbelegungserkennung ist eine etablierte Maßnahme zur Sicherheit der Fahrzeuginsassen. Über Sensoren wird ermittelt, ob ein Fahrzeugsitz belegt ist oder nicht, um dadurch zu bestimmen, welche Sicherheitsmaßnahmen in dem Fahrzeug aktiviert werden. Es wird auch unterschieden, ob sich auf dem Fahrzeugsitz eine Person befindet oder nur Gegenstände darauf abgelegt sind.

Vorzugsweise werden Foliendrucksensoren eingesetzt, die in einer bestimmten Anordnung über die Sitzfläche eines Sitzes verteilt werden und sich durch ihre flache Bauweise auszeichnen. Solche Foliendrucksensoren besitzen eine Trägerfolie, auf der die Sensorelemente sowie Leiterbahnen, die die Sensorelemente verbinden, aufgenommen sind. Um die Foliendrucksensoren der Sitzfläche eindeutig zuzuordnen, müssen sie in den Sitz integriert und in ihrer Position fixiert werden, wozu im Stand der Technik verschiedene Maßnahmen angewandt werden, wie beispielsweise die Verwendung von Ankerlaschen, die als Teil der Trägerfolie ausgeformt sind, oder von Fixierstiften oder Klebebändern.

Die DE 10 2005 046 549 A1 beschreibt eine Sensoranordnung mit einer flexiblen Leiterstruktur mit Sensoren, auf der zumindest einseitig ein Abstandshalter angeordnet ist. Die Sensoranordnung weist eine Umhüllung auf, die durch eine Folie gebildet ist. Der Abstandshalter ist aus einem Schaum oder einem Vliesstoff gebildet mit einem oberen Teil und einem unteren Teil, die am Rand entlang eines Überlapp-Bereichs miteinander verbunden sind, indem sie verklebt oder verschweißt sind. Eine solche Sensoranordnung wird in der Kraftfahrzeugelektronik eingesetzt.

Die DE 10 2006 052 935 A1 beschreibt einen Fahrzeugsitz mit einer durch Heizen, Kühlen oder Lüften temperaturkonditionierten Einheit. Die temperaturkonditionierte Einheit oder Komponente weist eine Polsterschicht auf mit einer oberen Stoffschicht und einer unteren Stoffschicht, die am Rand umlaufend miteinander versiegelt sind. Diese Polsterschicht ist in mehrere Taschen unterteilt, indem die obere Stoffschicht und die untere Stoffschicht abgesteppt sind oder versiegelt sind. Es ist erwähnt, dass in dem Sitz eine Vielzahl von Sensoren vorhanden sein kann, wie beispielsweise Temperatursensoren, Feuchtigkeitssensoren, Stromsensoren, Besetzungserfassungssensoren, Gewichtssensoren.

Der vorliegenden Erfindung liegt die Aufgabe zugrunde, ein Sitzbelegungserfassungselement für einen Fahrzeugsitz mit einem Foliendrucksensor zu schaffen, bei dem mit einfachen Mitteln der Foliendrucksensor in seiner Lage und Orientierung festgelegt werden kann.

Gelöst wird diese Aufgabe für ein Sitzbelegungserfassungselement mit den Merkmalen des Anspruchs 1. Bevorzugte Ausführungen sind in den abhängigen Ansprüchen angegeben.

Das erfindungsgemäße Sitzbelegungserfassungselement, das für einen Fahrzeugsitz vorgesehen ist, weist einen Foliendrucksensor mit mindestens einem Sensorelement auf, das auf einer Trägerfolie angeordnet ist. Dieser Foliendrucksensor liegt flächig auf einer Unterlageschicht auf und ist daran fixiert und wird als solcher in einem Fahrzeugsitz integriert. Ein wesentliches Merkmal des Sitzbelegungserfassungselements ist dasjenige, dass die Trägerfolie des Foliendrucksensors und die Unterlageschicht zumindest eine vergleichbare Materialkomponente enthalten und dass der Foliendrucksensor an der Unterlageschicht mittels Ultraschallschweißung partiell, d.h. an vorgegebene Stellen, zum Beispiel punktuell, verbunden ist. Hierbei müssen keine zusätzlichen Klebe- oder Haftmittel oder andere Verbindungselemente, d. h. zusätzliche Materialien oder Hilfsmittel, eingesetzt werden. Die Verbindung mittels Ultraschallschweißen kann automatisiert durchgeführt werden, indem der Foliendrucksensor auf die Unterlageschicht aufgelegt und durch Ultraschallschweißung verbunden wird. Während dieses Vorgangs kann der Foliendrucksensor an der Unterlageschicht durch den Ultraschallkopf vorzugsweise eine Sonotrode bzw. ein Sonotrodenkopf, oder die Ultraschalleinheit fixiert werden. Die Verbindung mittels Ultraschallschweißen kann auch eine linienförmige oder eckige Form aufweisen. Gemäß einer bevorzugten Maßnahme weist der Foliendrucksensor laschenförmige Ansätze auf, die frei von Leiterbahnen sind. Im Bereich dieser Ansätze ist der Foliendrucksensor mit der Unterlageschicht verbunden. Solche Ansätze werden vorzugsweise als Ausbuchtungen, Anformungen, Fortsätze oder Augen aus der Trägerfolie ausgeformt.

Es ist vorgesehen, dass die Verbindungsstelle, das bedeutet diejenige Stelle, an der die Folie des Foliendrucksensors mit der Unterlageschicht mittels Ultraschall verschweißt wird, von Sensorelementen des Foliendrucksensors oder Leiterbahnen einen Abstand von mindestens 2 mm, vorzugsweise von mindestens 5 mm, aufweist. Durch diese Maßnahme wird sichergestellt, dass durch den Ultraschweißvorgang weder Sensorelemente noch Leiterbahnen beschädigt oder in ihrer Funktionsweise beeinträchtigt werden. Es ist aber auch möglich das Sensordesign so zu gestalten, dass die partielle Verschweißung, beispielsweise die punktuelle Ultraschallverschweißung, an einem bestehenden Steg des Sensors erfolgt. Der Bereich muss frei von Leiterbahnen und Entlüftungskanälen sein.

Für eine punktuelle Schweißverbindungsstelle ist eine Flächenausdehnung von 2 mm bis 15 mm, vorzugsweise von 5 mm bis 10 mm, vorgesehen.

Durch eine abrollende Sonotrode kann eine linienförmige Verschweißung erreicht werden, die sich über einen längeren Bereich auf der Trägerfolie erstrecken kann. Bevorzugt ist eine Schweißverbindungsstelle, die als eine ringförmige Schweißstelle ausgebildet ist, da sie den erzeugten Wärmeeintrag auf eine größere Fläche verteilt, aber auch den Bereich, über den der Foliendrucksensor mit der Unterlageschicht verbunden ist, vergrößert.

Die Oberfläche der Sonotrode, die zur Erzeugung der Schweißverbindung dient, ist bevorzugt strukturiert ausgeführt.

Die Unterlageschicht sollte ein thermoplastischer Kunststoff sein mit zumindest einem Anteil an Kunststofffasern, beispielsweise Polyesterfasern, und einem Anteil an Bikomponentenfasern. Bevorzugt enthält die Unterlageschicht 95 % an Polyesterfasern. Ebenso ist es bevorzugt, dass dann ein Anteil an Bikomponentenfasern von 5 % eingesetzt wird. Diese Angaben der Anteile beziehen sich auf das Schüttgewicht der jeweiligen Faserkomponenten.

Kunststofffasern, beispielsweise Polyesterfasern, werden speziell mit flammhemmenden Fasern ausgerüstet, die im Brandfall langsam einschmelzen und nur schwer brennen.

Bikomponentenfasern sind Faserkonstruktionen, die im Kern und im Mantel zwei unterschiedliche Materialkomponenten enthalten. Diese haben unterschiedliche Eigenschaften, wie beispielsweise unterschiedliche Erweichungs- und Schmelztemperaturen.

Der Unterlageschicht kann ein Heizelement zugeordnet werden, das allerdings so im Verhältnis zu dem Foliendrucksensor und dessen Befestigungspunkten positioniert ist, dass sich die Verbindungsstellen, die für die Befestigung des Foliendrucksensor an der Unterlageschicht erzeugt werden, nicht negativ auf das Heizelement und dessen Funktion auswirken.

Falls ein Heizelement eingesetzt wird, kann dieses auch zwischen der Unterlageschicht und einer weiteren Unterlageschicht angeordnet werden. Vorzugsweise sollten diese beiden Unterlageschichten zumindest punktuell mittels Ultraschallschweißen miteinander verbunden werden, wobei diese Verbindung gleichzeitig mit der Verbindung des Foliendrucksensors an der Unterlageschicht, auf der er aufliegt, mittels Ultraschweißen erfolgen kann.

Es hat sich als vorteilhaft erwiesen, wenn die Ultraschallschweißung mit einer solchen Energie durchgeführt wird, dass die Verschweißung die Unterlageschicht durchdringt, das bedeutet das Material der Unterlageschicht ist bis zu deren dem Foliendrucksensor gegenüberliegenden Seite durchgeschmolzen.

Erfindungsgemäß ist die Unterlageschicht ein Abstandsgewirke, vorzugsweise ein textiles Abstandsgewirke. Hierbei weist das Abstandsgewirke zwei durch Abstandsfäden verbundene, im Wesentlichen parallel zueinander angeordnete Gewirkelagen auf, die eine im Wesentlichen wabenförmige Struktur aufweisen.

Der Foliendrucksensor kann sowohl auf der Seite des Abstandsgewirkes, die dem Insassen zugewandt ist, als auch auf der Seite des Abstandsgewirkes, die dem Insassen abgewandt ist, angeordnet sein. Der Foliendrucksensor wird mittels Ultraschall- bzw. Reibschweißen direkt mit dem Abstandsgewirke verbunden, wodurch eine sichere Lage und Orientierung erhalten wird. Der Foliendrucksensor wird sozusagen direkt ohne weiteres, zwischengefügtes Haftmaterial, beispielsweise Klebeband, Klettband, etc., mit dem Abstandsgewirke verbunden.

Das Abstandsmaterial ist im Wesentlichen aus Polyester gebildet. Unter Polyester ist eine große Familie synthetischer Polymere, zu der unter anderem Thermoplaste gehören, zu verstehen. Mit dem Ultraschallschweißen lassen sich thermoplastische Materialien miteinander verbinden. Der benötigte Wärmeeintrag zum Aufschmelzen oder zum Erweichen der beiden zu fügenden Materialien wird durch die hochfrequente mechanische Schwingung der Sonotrode erreicht. Das Aufschmelzen ist hierbei auf einen lokal begrenzten Bereich des Sonotrodenkopfs begrenzt. Damit eine materialhomogene Verbindung zwischen Foliendrucksensor und dem Abstandsgewirke erreicht wird, wird der Durchmesser des Sonotrodenkopfs so gewählt, dass der Sonotrodenkopf in die Öffnungsweite der wabenförmigen Struktur der Gewirkelagen passt und somit die wabenförmige Struktur durchdringbar ist.

Die beiden Gewirkelagen weisen eine Vielzahl von wabenförmigen Öffnungen auf. Die beiden Gewirkelagen sind durch Abstandsfäden zueinander beabstandet und sind im Wesentlichen parallel zueinander angeordnet. Eine Gewirkelage ist gegenüber der anderen Gewirkelage etwas verschoben, d.h. die Gewirkelagen sind nicht deckungsgleich zueinander angeordnet.

Damit der Foliendrucksensor mit dem Abstandgewirke an einer zuvor definierten Stelle miteinander verbindbar ist, wird das Abstandsgewirke auf dem Foliendrucksensor positioniert. Der Foliendrucksensor und die beiden durch Abstandsfäden auf Abstand gehaltenen Gewirkelagen bilden einen sogenannten Sandwichaufbau.

Die Sonotrode mit dessen Sonotrodenkopf wird zwischen der wabenförmigen Öffnung der einen Gewirkelage, die dem Foliendrucksensor abgewandten Seite, zwischen den Abstandsfäden hindurchgesteckt, bis die Sonotrode mit dessen Sonotrodenkopf die gegenüberliegende andere Gewirkelage berührt. Da die beiden beabstandeten Gewirkelagen im Wesentlichen parallel zueinander, jedoch nicht deckungsgleich, angeordnet sind, berührt ein Bereich der wabenförmigen Struktur der Gewirkelage, die dem Foliendrucksensor zugewandt ist, den Foliendrucksensor. Mit anderen Worten ausgedrückt wird der Foliendrucksensor von hinten, der dem Abstandsgewirke zugewandten Seite, mit dem Abstandsgewirke mittels des Sonotrodenkopfs ultraschallverscheißt. Als Positionierungshilfe kann auf dem Foliendrucksensor mindestens eine Markierung für die Verbindungsstelle vorgesehen sein. Mit Hilfe dieser Markierung wird eine Positionierung des Abstandsgewirkes auf dem Foliendrucksensor vereinfacht. Im Bereich dieser mindestens einen Markierung werden partiell oder punktuell der Foliendrucksensor und das Abstandsgewirke mittels Ultraschallverschweißung kraftschlüssig miteinander verbunden. Der Bereich der Verbindungsstelle muss frei von Leiterbahnen und Entlüftungskanälen sein.

Ein weiterer erfindungsgemäßer Gedanke ist, dass zwischen Foliendrucksensor und Abstandsgewirke eine Decklageschicht, beispielsweise ein Schaum bzw. Schnittschaum, etc., zwischengefügt ist. Wesentlich dabei ist, dass zwischen den Materialien des Foliendrucksensors, der Decklageschicht und des Abstandsgewirkes kein Haftmittel angeordnet ist. Die Materialien werden ausschließlich mittels Ultraschallverschweißung miteinander/untereinander verbunden. Die Decklageschicht weist dabei eine Dicke, im Querschnitt gesehen, von 5 mm bis 20 mm, bevorzugt zwischen 10 mm und 15 mm, auf. Die Decklageschicht dient dem Komfort eines auf dem Fahrzeugsitz sitzenden Insassen. Durch den Einsatz der Decklageschicht nimmt der Insasse ein weicheres Sitzgefühl wahr.

Weitere Einzelheiten und Merkmale der Erfindung ergeben sich aus der nachfolgenden Beschreibung von Ausführungsbeispielen anhand der Zeichnung. In der Zeichnung zeigt
- Figur 1: eine schematische Draufsicht auf eine Unterlageschicht mit darauf befestigtem Foliendrucksensor und mit einem angedeuteten Heizelement,
- Figur 2: eine Ansicht entsprechend der Figur 1 mit einem in der Formgebung unterschiedlichen Foliendrucksensor,
- Figur 3: einen Schichtaufbau, der die Anordnung des Foliendrucksensors und der Unterlageschicht in einem Sitzteil darstellt,
- Figur 4: den Schichtaufbau der Figur 3 mit zusätzlicher Klimatisierungseinheit,
- Figur 5: einen Schichtaufbau entsprechend der Figur 3 mit zwei Unterlageschichten, zwischen denen ein Heizelement angeordnet ist,
- Figur 6: einen weiteren möglichen Schichtaufbau, der die Anordnung des Foliendrucksensors und der Unterlageschicht in einem Sitzteil darstellt und
- Figur 7: einen Schichtaufbau entsprechend der Figur 6, wobei der Foliendrucksensors und die Unterlageschicht sind in deren Lageanordnung getauscht dargestellt.

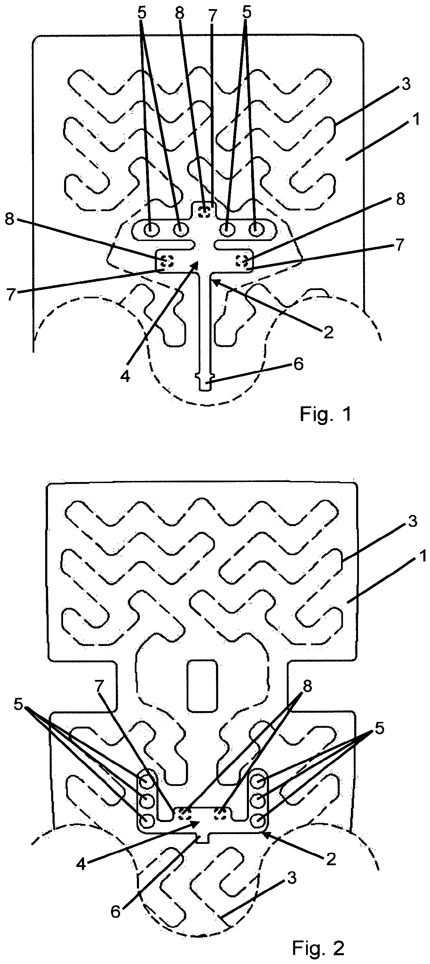

Die Anordnungen, die in den Figuren 1 und 2 in einer Draufsicht dargestellt sind, umfassen eine Unterlageschicht 1, auf der ein Foliendrucksensor 2 befestigt ist. Auch ist ein Heizelement 3 angedeutet, das sich unterhalb der Unterlageschicht 1, d.h. auf derjenigen Seite, die der Seite mit dem Foliendrucksensor 2 gegenüberliegt, befindet. Dieses Heizelement 3 ist durch einen Heizleiter gebildet, der über die Fläche der Unterlageschicht 1 verteilt in einem vorgegebenen Muster verlegt ist. Allerdings verläuft der Heizleiter um den Bereich herum, der durch den Foliendrucksensor 2 abgedeckt ist, so dass sich in Projektionsrichtung gesehen keine Überschneidungen zwischen Foliendrucksensor 2 und Heizleiter ergeben.

Der Foliendrucksensor 2 ist ein Flächengebilde aus zusammenhängenden, schmalen Streifen oder Bahnen einer Trägerfolie bzw. Kunststofffolie 4, vorzugsweise einer Polyesterfolie, besonders bevorzugt einer Polyimidfolie. In dem gezeigten Ausführungsbeispiel sind auf der Kunststofffolie vier einzelne Sensorelemente 5 positioniert, die über nicht näher dargestellte Leiterbahnen mit einem Anschlussende 6 der Trägerfolie 4 verbunden sind.

Die Trägerfolie 4 besitzt in dem gezeigten Ausführungsbeispiel drei laschenförmige Ansätze 7, die auch als Anformungen oder Fortsätze, Augen oder Ausbuchten, bezeichnet werden können und Teil der Trägefolie 4 sind. Im Bereich der Ansätze 7 befinden sich keine Leiterbahnen, die zu den Sensorelementen 5 führen.

Der Foliendrucksensor 2 liegt flächig auf einer Unterlageschicht 1 auf und ist daran im Bereich der drei Ansätze 7 über eine mittels Ultraschall erzeugte Verbindungsstelle 8 verschweißt. Aufgrund der vergleichbaren Materialkomponenten der Trägerfolie 4 des Foliendrucksensors 2 und der Unterlageschicht 1 gehen durch den Wärmeeintrag an der Schweißstelle die Materialien eine innige Verbindung ein, so dass der Foliendrucksensor 2 über seine Trägerfolie 4 an der Unterlageschicht 1 fixiert und somit in seiner Position festgelegt ist. Dies ist eine einfache und schnelle Art, um Foliendrucksensor 2 und Unterlageschicht 1 zu verbinden, ohne dass hierfür zusätzliche Materialien oder Materialkomponenten erforderlich wären. Auch kann diese Art der Befestigung automatisiert vorgenommen werden und erfordert nur einen sehr kurzen Montagevorgang.

In der Figur 2 ist eine weitere Anordnung eines Sitzbelegungserfassungselements, vergleichbar mit demjenigen, das in Figur 1 dargestellt ist, gezeigt. Im Gegensatz zu Figur 1 besitzt die Trägerfolie 4 des Foliendrucksensors 2 eine U-förmige Form, wobei an den zwei freien Schenkeln der U-Form beispielhaft jeweils drei Sensorelemente 5 verteilt angeordnet sind. Zur Befestigung des Foliendrucksensors 2 sind an dem Quersteg zwei Ultraschall-Verbindungsstellen 8 angeordnet. Ansonsten kann die Beschreibung des Sensorelements der Figur 1 entsprechend auch auf Figur 2 übertragen werden.

Damit die Verbindungsstelle 8, d. h. der Ultraschallschweißpunkt, die Sensorelemente 5 des Foliendrucksensors 2 nicht beeinträchtigt, ist ein Abstand der Verbindungsstelle 8 von dem Rand der Sensorelemente 5 von mindestens 2 mm, vorzugsweise von mindestens 5 mm, vorgesehen. Auch sollte die Verbindungsstelle 8 eine Flächenausdehnung von 2 mm bis 15 mm, vorzugsweise von 5 mm bis 10 mm, aufweisen.

Mit dem Ultraschallschweißen lassen sich nur thermoplastische Materialien miteinander verbinden. Der benötigte Wärmeeintrag zum Aufschmelzen oder Erweichen der beiden zu fügenden Materialien wird durch die hochfrequente mechanische Schwingung der Sonotrode erreicht. Das Aufschmelzen ist hierbei auf einen lokal begrenzten Bereich des Sonotrodenkopfs begrenzt. Um eine materialhomogene Verbindung zwischen Foliendrucksensor 2 und der Unterlageschicht 1 zu erreichen, weist die Unterlageschicht 1 zumindest einen Anteil an Polyesterfasern und einen Anteil an Bikomponentenfasern auf, mit einem bevorzugten Anteil an Polyesterfasern von 95 % und einem bevorzugten Anteil an Bikomponentenfasern von 5 % bezogen auf das Volumen.

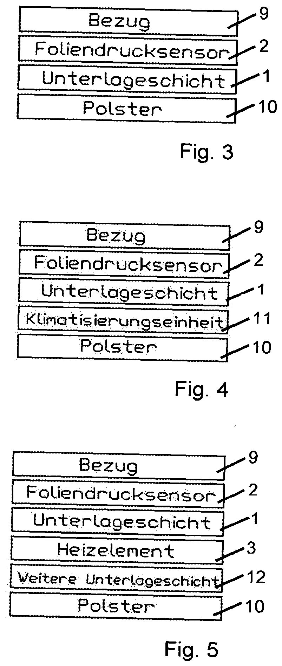

In Figur 3 ist die Anordnung des Sitzbelegungserfassungselements mit dem Foliendrucksensor 2 unterhalb eines Sitzbezugs 9 gezeigt. Auf der dem Bezug gegenüberliegenden Seite des Sitzbezugs 9 des Foliendrucksensors 2 befindet sich die Unterlageschicht 1 des Sitzbelegungserfassungselements. Die Unterlageschicht 1 liegt wiederum auf einem Polster 10 auf.

Die Figur 4 zeigt den Schichtaufbau der Figur 3, wobei zusätzlich zwischen Polster 10 und Unterlageschicht 1 des Sitzbelegungserfassungselements eine Klimatisierungseinheit 11 angeordnet ist. Die Unterlageschicht 1 kann eine eigenständige bzw. unabhängige Schicht einer Klimatisierungseinrichtung 11 sein. Auch kann die Unterlageschicht 1 eine Schicht sein, die Teil einer Klimatisierungseinrichtung 11 ist, beispielsweise in Form eines Abstandsgewirkes.

Der Schichtaufbau der Figur 5 weist als Klimatisierungseinheit 11 der Figur 4 ein Heizelement 3 auf, das zwischen der Unterlageschicht 1 und einer weiteren Unterlageschicht 12, die ebenso dem Sitzbelegungserfassungselements zuzuordnen ist, positioniert ist, wobei die beiden Unterlageschichten 1 und 12 zumindest punktuell mittels Ultraschallschweißen miteinander verbunden sind, vorzugsweise mit derselben Punktschweißung, mit der der Foliendrucksensor 2 fixiert wird.

Eine weitere Ausführungsform, die nicht dargestellt ist, könnte derart sein, dass der Schichtaufbau, der in Figur 3 dargestellt ist, in der Reihenfolge dessen Schichtaufbau von Unterlageschicht 1 und Foliendrucksensor 2 getauscht ist. Auf der dem Bezug 9 gegenüberliegenden Seite, die in Richtung des Polsters 10 weist, befindet sich der Foliendrucksensor 2, der wiederum an der Unterlageschicht 1 angeordnet ist. Die Unterlageschicht 1 ist wiederum zu dem Polster 10 hin angeordnet. Diese vertauschte Reihenfolge lässt sich natürlich auch auf die bereits beschriebenen Ausführungsformen der Figuren 4 und 5 übertragen.

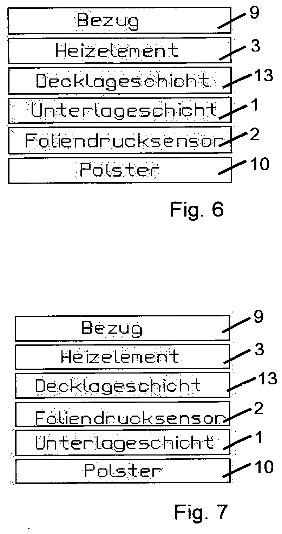

Die Figur 6 zeigt einen weiteren möglichen Schichtaufbau. Hierbei ist das Heizelement 3 direkt unterhalb des Bezugs 9 angeordnet und der Foliendrucksensor 2 ist oberhalb, beispielsweise direkt auf dem Polster 10, angeordnet. Zwischen Foliendrucksensor 2 und Polster 10 kann eine Haftschicht, die in den Figuren nicht dargestellt ist, zwischengefügt sein. Die Haftschicht kann beispielsweise Klettband oder doppelseitiges Klebeband sein. Die Art und Auswahl der Haftfläche ist nicht auf die angegebenen Materialbeispiele limitiert oder beschränkt und hängt von den eingesetzten Polstermaterialien 10 ab, auf denen das Sitzbelegungserfassungselement angeordnet ist. Oberhalb des Foliendrucksensors 2 sind eine Unterlageschicht 1 und darüber eine Decklageschicht 13 angeordnet. Die Decklageschicht 13 dient dem Sitzkomfort eines auf dem Fahrzeugsitz sitzenden Insassen.

Entscheidend ist, dass die Unterlageschicht 1 und der Foliendrucksensor 2 mittels Ultraschallverschweißung miteinander verbunden sind.

Der Schichtaufbau der Figur 7 unterscheidet sich von dem Schichtaufbau der Figur 6 insofern, dass die Unterlageschicht 1 und der Foliendrucksensor 2 in deren Anordnung zueinander getauscht sind. Hierbei kann die Unterlageschicht 1 ein Abstandsgewirke sein.

## Patentansprüche

1. Sitzbelegungserfassungselement für einen Fahrzeugsitz, mit einem Foliendrucksensor (2), der mindestens ein Sensorelement (5), angeordnet auf einer Trägerfolie (4), aufweist, wobei der Foliendrucksensor (2) auf einer Unterlageschicht (1) flächig aufliegt und daran fixiert ist, wobei die Trägerfolie (4) des Foliendrucksensors (2) und die Unterlageschicht (1) zumindest eine vergleichbare Materialkomponente enthalten, **dadurch gekennzeichnet, dass** der Foliendrucksensor (2) an der Unterlageschicht (1), die ein Abstandsgewirke ist, mittels Ultraschallschweißung partiell verbunden ist.

2. Sitzbelegungserfassungselement nach Anspruch 1, **dadurch gekennzeichnet, dass** der Foliendrucksensor (2) laschenförmige Ansätze (7) frei von Leiterbahnen aufweist, im Bereich derer er mit der Unterlageschicht (1) verbunden ist.

3. Sitzbelegungserfassungselement nach Anspruch 1 oder 2, **dadurch gekennzeichnet, dass** die Verbindungsstelle (8) von Sensorelementen (5) des Foliendrucksensors (2) einen Abstand von mindestens 2 mm, vorzugsweise von mindestens 5 mm, aufweist.

4. Sitzbelegungserfassungselement nach einem der Ansprüche 1 bis 3, **dadurch gekennzeichnet, dass** die Verbindungsstelle (8) eine Flächenausdehnung von 2 mm bis 15 mm, vorzugsweise von 5 mm bis 10 mm, aufweist.

5. Sitzbelegungserfassungselement nach einem der Ansprüche 1 bis 4, **dadurch gekennzeichnet, dass** die Unterlageschicht (1) aus einem thermoplastischen Kunststoff ausgeführt ist mit zumindest einem Anteil an Polyesterfasern und einem Anteil an Bikomponentenfasern.

6. Sitzbelegungserfassungselement nach Anspruch 5, **dadurch gekennzeichnet, dass** der Anteil an Polyesterfasern 95 % beträgt.

7. Sitzbelegungserfassungselement nach Anspruch 5, **dadurch gekennzeichnet, dass** der Anteil an Bikomponentenfasern 5 % beträgt.

8. Sitzbelegungserfassungselement nach einem der Ansprüche 1 bis 7, **dadurch gekennzeichnet, dass** der Unterlageschicht (1) ein Heizelement (3) zugeordnet ist.

9. Sitzbelegungserfassungselement nach Anspruch 8, **dadurch gekennzeichnet, dass** das Heizelement (3) zwischen der Unterlageschicht (1) und einer weiteren Unterlageschicht (12) angeordnet ist, wobei die beiden Unterlageschichten (1, 12) zumindest punktuell mittels Ultraschallschweißen miteinander verbunden sind.

## Claims

1. Seat occupancy detection element for a vehicle seat with a foil pressure sensor (2), which has at least one sensor element (5) arranged on a carrier foil (4), wherein the foil pressure sensor (2) lies flat on a support layer (1) and is fixed thereto, wherein the carrier foil (4) of the foil pressure sensor (2) and the support layer (1) contain at least one comparable material component, **characterized in that** the foil pressure sensor (2) is partially connected to the support layer (1), which is a spacer fabric, by means of ultrasonic welding.

2. Seat occupancy detection element according to claim 1, **characterized in that** the foil pressure sensor (2) has tab-like projections (7) free of conductor tracks, in the region of which it is connected to the support layer (1).

3. Seat occupancy detection element according to claim 1 or 2, **characterized in that** the connection point (8) of sensor elements (5) of the foil pressure sensor (2) has a distance of at least 2 mm, preferably of at least 5 mm.

4. Seat occupancy detection element according to one of claims 1 to 3, **characterized in that** the connection point (8) has a surface extension of 2 mm to 15 mm, preferably of 5 mm to 10 mm.

5. Seat occupancy detection element according to one of claims 1 to 4, **characterized in that** the support layer (1) is made of a thermoplastic synthetic material with at least a proportion of polyester fibres and a proportion of bicomponent fibres.

6. Seat occupancy detection element according to claim 5, **characterized in that** the proportion of polyester fibres is 95 %.

7. Seat occupancy detection element according to claim 5, **characterised in that** the proportion of bicomponent fibres is 5 %.

8. Seat occupancy detection element according to any one of claims 1 to 7, **characterized in that** a heating element (3) is associated with the support layer (1).

9. Seat occupancy detection element according to claim 8, **characterized in that** the heating element (3) is arranged between the support layer (1) and a further support layer (12), the two support layers (1, 12) being joined together at least at points by means of ultrasonic welding.

## Revendications

1. Élément de détection d'occupation de siège pour un siège de véhicule, avec un capteur de pression à membrane (2) qui présente au moins un élément de capteur (5) agencé sur une membrane de support (4), dans lequel le capteur de pression à membrane (2) repose à plat sur une sous-couche (1) et est fixé contre celle-ci, dans lequel la membrane de support (4) du capteur de pression à membrane (2) et la sous-couche (1) contiennent au moins un composant de matériau comparable, **caractérisé en ce que** le capteur de pression à membrane (2) est partiellement relié à la sous-couche (1), qui est un tricot d'écartement, au moyen d'un soudage par ultrasons.

2. Élément de détection d'occupation de siège selon la revendication 1, **caractérisé en ce que** le capteur de pression à membrane (2) présente des épaulements (7) en forme de languette dépourvus de pistes conductrices, dans la région desquels il est relié à la sous-couche (1).

3. Élément de détection d'occupation de siège selon la revendication 1 ou 2, **caractérisé en ce que** l'emplacement de liaison (8) d'éléments de capteur (5) du capteur de pression à membrane (2) présente un espacement d'au moins 2 mm, de préférence d'au moins 5 mm.

4. Élément de détection d'occupation de siège selon l'une des revendications 1 à 3, **caractérisé en ce que** l'emplacement de liaison (8) présente une superficie de 2 mm à 15 mm, de préférence de 5 mm à 10 mm.

5. Élément de détection d'occupation de siège selon l'une des revendications 1 à 4, **caractérisé en ce que** la sous-couche (1) est réalisée dans une matière thermoplastique avec au moins une teneur en fibres de polyester et une teneur en fibres à deux composants.

6. Élément de détection d'occupation de siège selon la revendication 5, **caractérisé en ce que** la teneur en fibres de polyester s'élève à 95 %.

7. Élément de détection d'occupation de siège selon la revendication 5, **caractérisé en ce que** la teneur en fibres à deux composants s'élève à 5 %.

8. Élément de détection d'occupation de siège selon l'une des revendications 1 à 7, **caractérisé en ce qu'**un élément de chauffage (3) est affecté à la sous-couche (1).

9. Élément de détection d'occupation de siège selon la revendication 8, **caractérisé en ce que** l'élément de chauffage (3) est agencé entre la sous-couche (1) et une autre sous-couche (12), dans lequel les deux sous-couches (1, 12) sont reliées ensemble au moins ponctuellement au moyen d'un soudage par ultrasons.
